# EUROPEAN PATENT APPLICATION

(11) **EP 2 784 577 A1**
(43) Date of publication of application: **01.10.2014**
(21) Application number: 14159787.2
(22) Date of filing: 14.03.2014
(51) Int. Cl.: G03B 21/00

(54) **Projector and head-up display device**

(30) Priority: 29.03.2013 JP 2013071317
(71) Applicant: Funai Electric Co., Ltd., Daito city Osaka 574-0013 (JP)
(72) Inventor: Takahashi, Yutaka, Osaka Osaka 574-0013 (JP)
(74) Representative: Osha Liang SARL

(57) **Abstract**

A projector comprising a main body enclosure (15) and a housing (10, 101) configured to house an optics module (108) and that is disposed within the main body enclosure (15). The housing (10, 101) comprises a case (101) with a first opening (101a), a first cover (102) attached to the first opening (101a), and a first seal ((103) configured to create an airtight seal between a peripheral edge of the first opening (101a) and the first cover (102). Air pressure within the housing (10, 101) is set to a value that is different from air pressure between the main body enclosure (15) and the housing (10, 101).

## Description

### Technical Field

The present invention relates generally to a projector and a head-up display device.

### Background Art

Conventionally, solid-state light sources such as LEDs (Light Emitting Diodes) or LDs (Laser Diodes) have been used as light sources for projectors. In a projector with a solid-state light source, Peltier elements have been attached to each individual light source module to cool the light source modules through the Peltier elements in order to prevent the temperature from rising in a plurality of light sources.

While the increase in temperature of the light sources is prevented when cooling the light source modules using Peltier elements, this causes moisture surrounding the light source module to cool and condense, which tends to produce fogging. Given this, in Japanese Unexamined

Patent Application Publication 2011-75797, a sealed chamber containing the optical elements is provided in the casing of the projector to prevent the incursion of moisture into the sealed chamber.

In the projector in Japanese Unexamined Patent Application Publication 2011-75797, the light source is not contained within a sealed chamber, so it is not possible to prevent condensation that occurs around the light source. Moreover, no thought whatsoever is given to the convenience in operations when having to disassemble the sealed chamber in order to change a part, or the like, that is enclosed within the sealed chamber.

One or more embodiments of the present invention provide a projector and a head-up display device wherein there is improved convenience in operation at the time of disassembly, while maintaining a highly sealed state.

### Summary of the Invention

In one aspect, a projector according to one or more embodiments may comprise: a main body enclosure; and a housing configured to house an optics module and that is disposed within the main body enclosure, wherein the housing comprises: a case comprising a first opening; a first cover attached to the first opening; and a first seal configured to create an airtight seal between a peripheral edge of the first opening and the first cover, wherein air pressure within the housing is set to a value that is different from air pressure between the main body enclosure and the housing.

In one or more embodiments, the housing may comprise a window attached to the first opening, the optics module may comprise a light source configured to emit a light beam that passes through the window, the first cover may cover the first opening from outside of the first opening, and the air pressure within the housing may be set to a value that is lower than the air pressure between the main body enclosure and the housing.

In one or more embodiments, the housing may comprise a window attached to the first opening, the optics module may comprise a light source configured to emit a light beam that passes through the window, the first cover may cover the first opening from inside of the first opening; and the air pressure within the housing may be set to a value that is higher than the air pressure between the main body enclosure and the housing.

In one or more embodiments, the light source may be a laser diode.

Moreover, in one or more embodiments, the case may comprise a second opening that enables the optics module to be removed from or placed in the case; and the housing may comprise a second cover that covers the second opening from the outside of the second opening.

Moreover, in one or more embodiments, the cover may be provided with a pressure adjusting member for adjusting the air pressure within the housing.

In one or more embodiments, the pressure adjusting member comprises a through hole provided in the first cover, a stopper comprising a shaft that passes through the through hole, a head with a diameter larger than a diameter of the through hole, and a second seal that creates an airtight seal between the through hole and the stopper.

In one or more embodiments, one or a plurality of electrical connecting terminals, provided in an electrical connecting terminal portion, is fitted into a further opening.

A head-up display (also termed a "HUD") device according to one or more embodiments of the present invention may comprise: a projector as set forth in above; and a combiner that displays a virtual image by reflecting, toward a viewer, light emitted from a light source that is mounted in the optics module.

As a result, for example, in the projector according to one or more embodiments of the present invention, not only is the gap between the peripheral edge of the opening and the cover sealed airtightly by a seal, but also the peripheral edge of the opening and the cover are pressed together by a pressure differential wherein the inside and outside of the housing that contains the optics module are set to different pressures. Consequently, in one or more embodiments, this increases the tightness of the seal, preventing the incursion of moisture into the housing. On the other hand, because the peripheral edge of the opening and the cover are not bonded through an adhesive agent, the convenience in operation is improved at the time of disassembly, that is, when the cover is removed from the peripheral edge of the opening. Moreover, the projector set forth above may be applied to a head-up display device.

### Brief Descriptions of the Drawings

FIG. 1 is a schematic diagram of an HUD device according to one or more embodiments of the present invention.
FIG. 2 is a block diagram illustrating the configuration of a projector according to one or more embodiments of the present invention.
FIG. 3 is an assembly perspective diagram of the housing provided in a projector according to one or more embodiments of the present invention.
FIG. 4 is a schematic plan view diagram illustrating the state wherein the optics module is contained within a case in a projector according to one or more embodiments of the present invention.
FIG. 5 is a schematic cross-sectional perspective diagram illustrating the configuration of the housing and the vicinity thereof provided in a projector according to one or more embodiments of the present invention.
FIG. 6 is a cross-sectional schematic drawing illustrating the attaching structure of the cover to the case in one or more embodiments of a first example of the present invention.
FIG. 7 is a cross-sectional schematic drawing illustrating the attaching structure of the cover to the case in one or more embodiments of a second example of the present invention.
FIG. 8 is a cross-sectional schematic drawing illustrating the attaching structure of the cover to the case in one or more embodiments of a third example of the present invention.
FIG. 9 is a cross-sectional schematic drawing illustrating the attaching structure of the cover to the case in one or more embodiments of a fourth example of the present invention.

### Detailed Description of the Embodiments

Embodiments of projectors and HUD devices according to the present invention will be described in detail below while referencing the figures.

### < First Example >

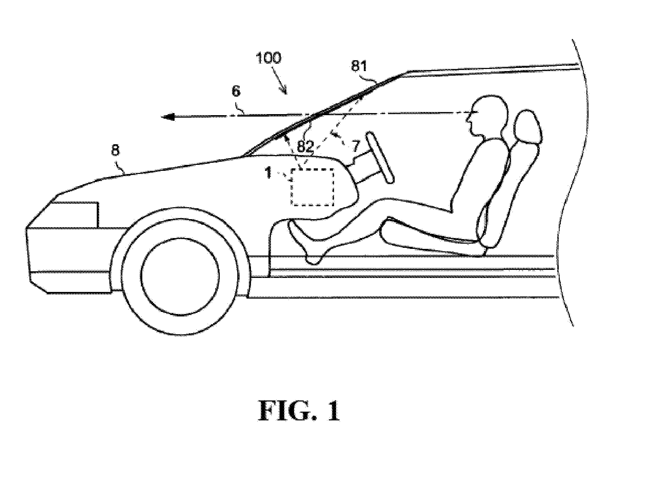

FIG. 1 is a schematic diagram of an HUD device 100 according to one or more embodiments of a first example of the present invention. The HUD device 100 according to one or more embodiments is mounted onboard a vehicle 8. The HUD device 100 may be mounted onboard not only an automobile, but on another vehicle (such as an airplane, or the like) instead. The HUD device 100 is a display device for displaying a projected image superimposed in the field of view of a user by projecting a scanning laser light 7 (a projected beam) from a projector 1 toward a windshield 81. In FIG. 1 the arrow 6 of the single dotted line indicates the line of sight of a user seated in the driver's seat of the vehicle 8.

As illustrated in FIG. 1, a combiner 82, which is formed using, for example, a semi-transparent reflective material, is adhered to the inner surface of the windshield 81. The projection of the scanning laser light 7 from the projector 1 onto the combiner 82 causes a virtual image to be formed. The result is that the user, who is looking toward the front of the vehicle (that is, in the direction of the line of sight 6) is able to view simultaneously the outside view in front of the vehicle 8 and the projected image that is projected by the projector 1.

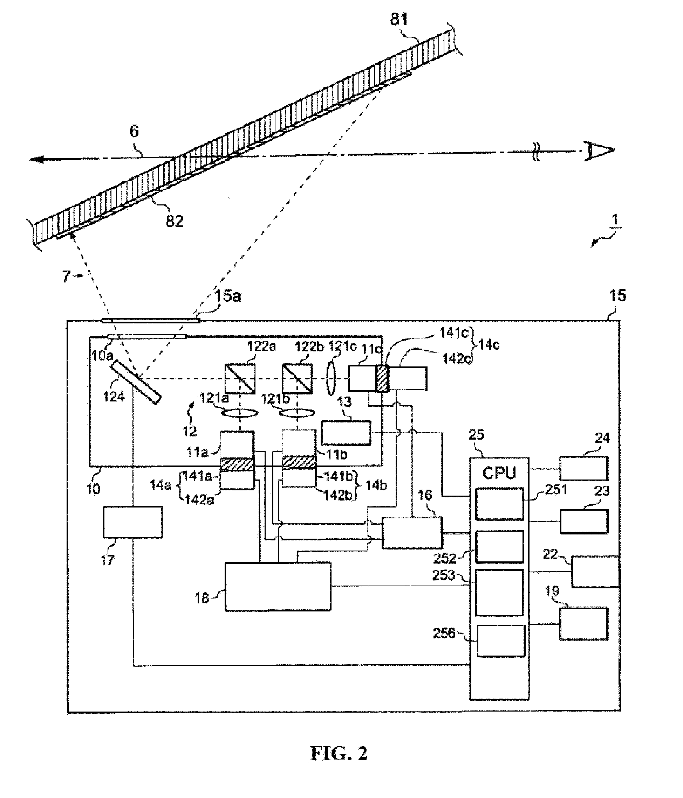

The configuration of the projector 1 will be explained next. FIG. 2 is a block diagram illustrating the configuration of a projector 1 according to one or more embodiments of a first example of the present invention. As illustrated in FIG. 2, the projector 1 is provided with a main body enclosure 15 that contains various structural elements that configure the projector 1. A light emitting portion 15a for emitting the scanning laser light 7 is formed in the main body enclosure 15. The light emitting portion 15a may be open or may be formed using, for example, glass or a transparent resin material. Doing so makes it possible to prevent the incursion of dust, moisture (for example, water droplets or air containing water vapor), and the like into the main body enclosure 15.

A housing 10, laser diodes 11a to 11c, an optics system 12, a thermistor 13, and heating and cooling portions 14a through 14c are mounted within the main body enclosure 15. The laser diodes shall be referred to as "LDs," below. Moreover, an LD driver 16, a mirror servo part 17, a Peltier element driver 18, a power source part 19, an input and output I/F 22, an operation part 23, a storage part 24, and a CPU 25 are provided within the main body enclosure 15. Along with this, the projector 1 is further provided with an audio outputting portion such as, for example, a speaker, or the like.

The housing 10 is a housing portion that is sealed airtightly, wherein the respective LDs 11a to 11c, the optics system 12, the thermistor 13, and the heating and cooling portions 14a through 14c are mounted. Moreover, a window 10a, from which the scanning laser light 7 that is emitted from the optics system 12 is emitted to the outside, and an opening (not shown) for installation of heat conducting members 141a through 14 1 c, described below, are formed in the housing 10. The window 10a may be formed using, for example, glass, a transparent resin material, or the like.

The LD 11a is a light-emitting element that emits a blue laser beam. The LD 11b is a light-emitting element that emits a green laser beam. The LD 11c is a light-emitting element that emits a red laser beam.

The optics system 12 includes collimator lenses 121a through 121c, beam splitters 122a and 122b, and an MEMS (Micro Electro Mechanical System) mirror 124. Other optical elements, such as prisms, focusing lenses, and the like, may be disposed as appropriate in the optics system 12.

The collimator lenses 121a through 121c are optical elements for converting the laser beams that are emitted from the individual LDs 11a through 11c into collimated beams. Moreover, the beam splitters 122a and 122b may be configured from, for example, dichroic mirrors. In this case, the beam splitters 122a and 122b then become optical elements that reflect light of a particular wavelength and transmit light of another wavelength. The beam splitter 122a reflects the blue laser beam and transmits the red and green laser beams. The beam splitter 122b reflects the blue laser beam and transmits the red laser beam. The beam splitters 122a and 122b may be configured from, for example, half mirrors, rather than from dichroic mirrors. The MEMS mirror 124 is an optical reflecting element that reflects the incident laser beams of the individual colors.

The MEMS mirror 124 is able to vary the direction of reflection of the laser beams in two axial directions. The MEMS mirror 124, by varying the direction in which the laser beams are reflected, causes a scanning laser light 7 to be emitted from the optics system 12. This scanning laser light 7 is emitted to the outside of the main body enclosure 15 through the window 10a of the housing 10 and the light emitting portion 15a of the main body enclosure 15, to be projected onto the combiner 82 on the windshield 81.

The thermistor 13 is a temperature detecting portion that is provided within the housing 10 in order to measure the ambient temperature around the individual LDs 11a through 11c. That is, the LDs 11a through 11c can be maintained at their individual temperatures through the temperatures detected by the thermistor 13. While in FIG. 2 the operating temperature of the individual LDs 11a through 11c is measured using a single thermistor 13, the operating temperatures of the individual LDs 11a through 11c may be measured individually using a plurality of thermistors 13.

The heating and cooling portions 14a through 14c perform heating or cooling of the individual LDs 11a through 11c depending on the temperature detected by the thermistor 13. The heating and cooling portions 14a through 14c are configured from respective heat conducting members 141a through 141c and Peltier elements 142a through 142c. The heat conducting members 141a through 141c are configured from material that has high thermal conductivity, formed using, for example, a metal material such as Cu, Al, Au, or an alloy that includes at least one of these, or using a ceramic material that has high thermal conductivity, or the like. The heat conducting members 141a through 141c conduct heat between the individual LDs 11a through 11c and the individual Peltier elements 142a through 142c. The Peltier elements 142a through 142c are thermoelectric elements that use the Peltier effect, elements that can heat and cool the LDs 11a through 11c. The projector 1 includes a heat dissipating portion for dissipating heat produced from the Peltier elements 142a through 142b, which will be described in detail below.

The LD driver 16 performs driving control of the individual LDs 11a through 11c. The LD driver 16 is provided so as to perform driving control regarding the respective light emission and optical powers, and the like, of the individual LDs 11a through 11c.

The mirror servo part 17 is a driving controlling portion for driving the MEMS mirror 124. For example, the mirror servo part 17 drives the MEMS mirror 124 in response to a horizontal sync signal from the CPU 25, to thereby vary the direction of reflection in the horizontal direction by the MEMS mirror 124. For example, the mirror servo part 17 drives the MEMS mirror 124 in response to a vertical sync signal from the CPU 25, to thereby vary the direction of reflection in the vertical direction by the MEMS mirror 124.

The Peltier element driver 18 performs driving control of the individual Peltier elements 142a through 142c. The Peltier element driver 18 is provided so as to drive and control the respective heating actions and cooling actions of the individual Peltier elements 142a through 142c. The Peltier element driver 18 includes a switching part for switching the actions of the individual Peltier elements 142a through 142c (to a heating action, a cooling action, no action, etc.). An FET (Field-Effect Transistor), or the like, is used for the switching part.

The power source part 19 receives a supply of power from a power source such as, for example, the battery (not shown) of the vehicle 8, and performs transformation, or the like, into voltages depending on the various constituent portions of the projector 1, and supplies the transformed electric power to the individual structural elements. The input and output I/F 22 is a communication interface for either wired or wireless communication with an external device. The operation part 23 is an inputting unit for receiving operation inputs from the user.

The storage part 24 is a non-volatile storing medium, and stores programs and control data used by the various constituent portions (for example, the CPU 25) of the projector 1. Along with this, the storage part 24 also stores, for example, image information to be projected onto the combiner 82. While in FIG. 2 the storage part 24 is a separate constituent portion from the CPU 25, there is no limitation to this example, and instead it may be included within the CPU 25.

The CPU 25 is a controlling portion for controlling the various constituent portions of the projector 1 using the programs, control information, and the like that are stored in the storage part 24. The CPU 25 comprises a video processor 251, an LD controller 252, a mirror controller 256, and a heating and cooling controller 253.

The video processor 251 generates image information based on a program stored in the storage part 24, information inputted from the input and output I/F 22, information stored in the storage part 24, and the like. Furthermore, the video processor 251 converts the image information that is produced into trichroic image data of red (R), green (G), and blue (B). The converted trichroic image data is outputted to the LD controller 252. The LD controller 252, based on this trichroic image data, generates light controlling signals for the individual LDs 11a through 11c and outputs them to the LD driver 16. Moreover, the mirror controller 256 generates control signals for controlling the direction of the MEMS mirror 124, based on the image information, and outputs them to the mirror servo part 17.

The heating and cooling controller 234 generates controlling signals for driving and controlling the individual Peltier elements 142a through 142c, based on information obtained from, for example, the thermistor 13, and outputs them to the Peltier element driver 18.

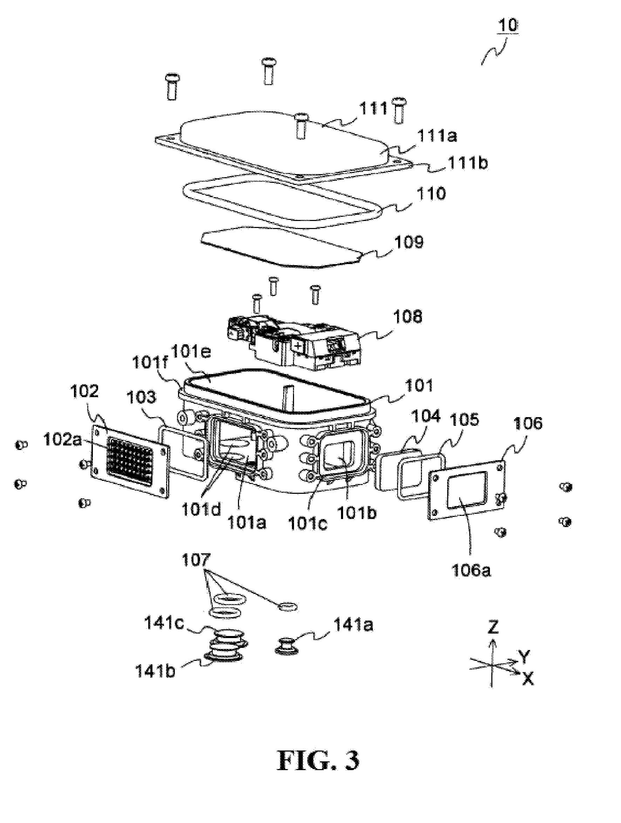

The housing 10 that is provided in the projector 1, and the structures peripheral thereto, will be explained in detail next. FIG. 3 is an assembly perspective diagram of a housing 10 that is provided in a projector 1 according to one or more embodiments of the first example of the present invention. As illustrated in FIG. 3, the housing 10 comprises, broadly, a case 101 and a cover 111.

The case 101 is a box-shaped member wherein the external dimensions are shaped essentially as a rectangular solid. The case 101 is formed from, for example, a resin that has low thermal conductivity. A first opening 101a, which is essentially rectangular in the plan view is formed in essentially the center portion of one of the two side walls that are parallel to the lengthwise direction (the X direction in FIG. 3) of the case 101. A plurality of electrical connecting terminals 102a, provided in an electrical connecting terminal portion 102, is fitted into the first opening 101a. The electrical connecting terminal portion 102 is formed from, for example, a hermetic seal with high airtightness or insert molding of the terminals.

As a result, in a state wherein the electrical connecting terminals 102a are exposed to both the outside and the inside of the case 101, the electric circuits on the inside of the case 101 and the electric circuits on the outside of the case 101 can be connected together electrically. When in a state wherein a seal 103 (an O-ring, a gasket, a liquid sealing material, or the like) for ensuring airtightness of the inside of the housing 10 is held therebetween, the outer peripheral sides (the parts wherein the electrical connecting terminals 102a are not provided) of the electrical connecting terminal portion 102 are secured by screws to the sidewall of the case 101 from the outside.

Moreover a second opening 101b, which is essentially rectangular in the plan view is formed in essentially the center portion of one of the two side walls that are parallel to the short direction (the Y direction in FIG. 3) of the case 101. A wall 101c is erected so as to surround the second opening 101b on the outside surface side of the sidewall wherein the second opening 101b is formed, to form a recessed portion space. A glass window 104 is fitted into the recessed portion space so as to cover the second opening 101b. The window 104 can be configured from a material with high transparency to optical light, and there is no limitation to the structural material being glass. The window 104 is secured by a seal 105 (for example, an O-ring, or the like) for maintaining the airtightness of the housing 10, and a window frame 106 wherein an opening 106a, through which light passes, is formed. The window frame 106 is secured by screws to the sidewall of the case 101 from the outside.

Moreover, three third openings 101d, into which the three respective heat conducting members 141a through 141c are fitted, are formed in the bottom of the case 101. In FIG. 3, only two of the third openings 101d are illustrated. Moreover, the third openings 101d are provided toward one end portion of the case 101 in the lengthwise direction (on the side that is opposite of the side wherein the window 104 is provided). In each of the three heat conducting members 141a through 141c, a constricted shape is formed in the middle portion thereof, and the heat conducting member 141a through 141c is attached to the case 101 from the outside (from below) in a state wherein a seal 107 (such as, for example, an O-ring, or the like) is fitted on the middle portion. Because of this, the airtightness of the inside of the housing 10 is maintained despite the existence of the third openings 101d.

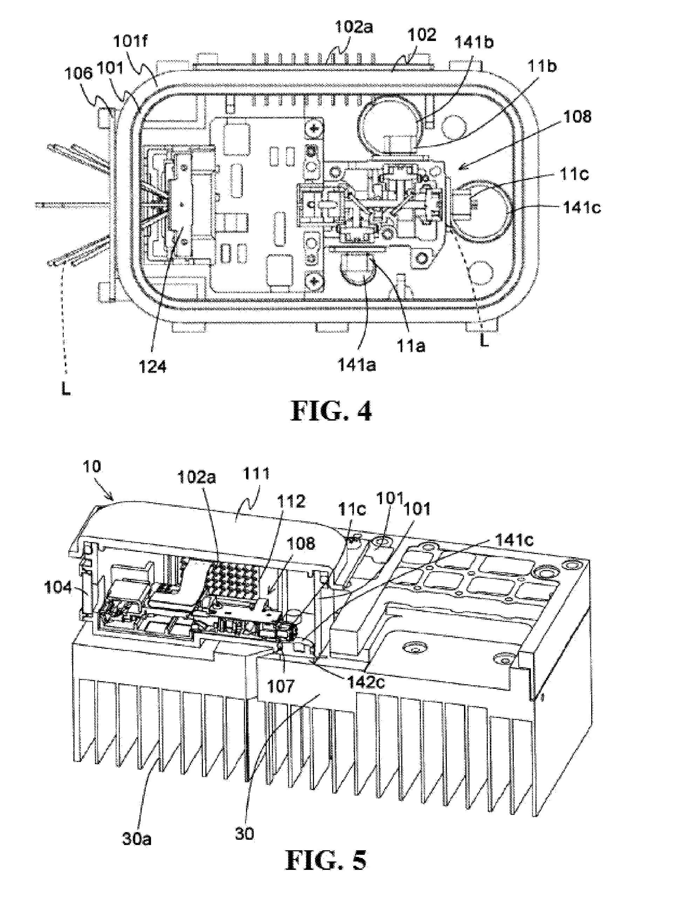

An optics module 108 whereon the three LDs 11a through 11c and the optics system 12 are mounted is contained within the case 101. The optics module 108 is secured within the case 101 through, for example, screws. FIG. 4 is a schematic plan view diagram illustrating the state wherein the optics module 108 is contained within the case 101 in a projector 1 according to one or more embodiments of the first example of the present invention. In FIG. 4, the electrical connecting terminal portion 102 and the window 104 are also installed. A laser beam L is also illustrated in FIG. 4. In FIG. 3 and FIG. 4, the left/right orientations of the housing 10 are reversed.

The configuration is such that, in a state wherein the optics module 108 is contained within the case 101, the individual LDs 11a through 11c, and the heat conducting members 141 a through 141c corresponding thereto (referencing FIG. 2), make thermal contact. Moreover, the electrical circuits that configure the LDs 11a through 11c and the MEMS mirror 124 are connected to the electrical connecting terminals 102a.

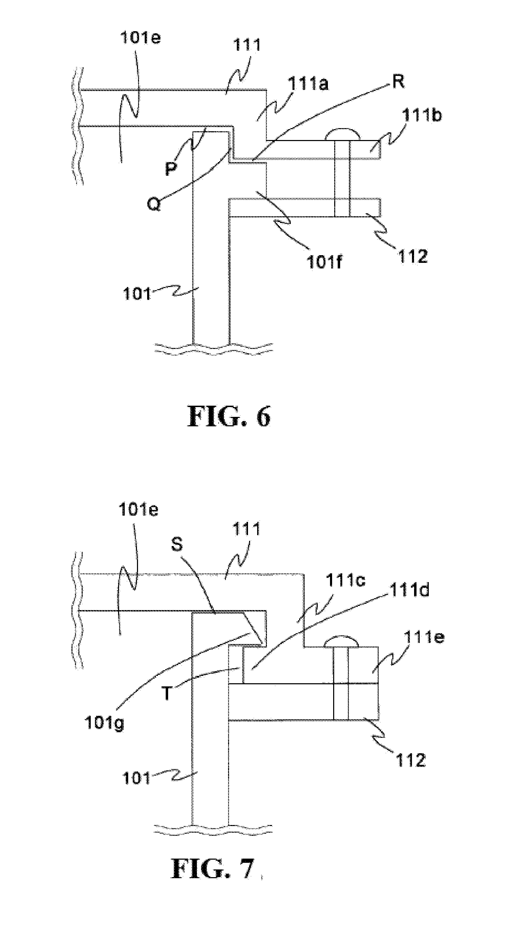

In a state wherein the optics module 108 is contained within the case 101, a reinforcing member 109 is contained within the case 101, and when a cover 111 is placed over the top opening 101e from the outside (from above), the housing 10 that contains the optics module 108, and the like, is formed. To maintain the airtightness within the housing 10, when the cover 111 is installed, a seal 110 is interposed therebetween. The cover 111 may be a configuration that is secured by screws to the case 101, but in one or more embodiments of the first example, as illustrated in FIG. 5 and FIG. 6, described below, it is secured with screws to a separate member (a frame member 112). The cover 111 is formed from, for example, a resin that has low thermal conductivity.

FIG. 5 is a schematic cross-sectional perspective diagram illustrating the housing 10, and the configurations peripheral thereto, that are provided in a projector 1 according to one or more embodiments of the first example of the present invention. In FIG. 3 and FIG. 5, the left/right orientations of the housing 10 are reversed. As illustrated in FIG. 5, a heat dissipating plate 30 that is provided with a large number of fins 30a on the bottom surface side thereof is disposed on the bottom side of the housing 10. The three Peltier elements 142a through 142c are disposed on the heat dissipating plate 30. The three Peltier elements 142a through 142c are disposed so as to be in thermal contact with the bottom surfaces of the respective corresponding heat conducting members 141a through 141c (referencing FIG. 2).

FIG. 6 is a cross-sectional schematic diagram illustrating the structure for attaching the cover 111 to the case 101 in one or more embodiments of the first example. A flange 101f is formed in a ring shape (referencing FIG. 3), protruding to the outside from the outer periphery of surfaces of the sidewalls at that the tops of the sidewalls of the case 101. The cover 111 comprises sidewalls 111a that face the outer peripheral surface and the flange 101f of the case 101. A flange 111b that is formed in a ring shape (referencing FIG. 3) is formed protruding from the outer peripheral surfaces of the sidewalls 111a at the bottom of the sidewalls 111a.

A seal 110 is disposed so as to airtightly block any of the gaps P, Q, or R that are formed between the case 101 and the cover 111, where, in one or more embodiments of the first example, the seal 110 is disposed so as to block the gap Q. The blocked gap need not be singular, but instead a plurality of seals 110 may be disposed so as to block a plurality of gaps.

A frame member 112 is attached to the bottom surface side of the flange 101f, and is secured through screws that pass through screw holes (not illustrated) that are formed in the flange 111b and the frame member 112 in a state wherein the cover 111 is attached from above the case 101. While in one or more embodiments the fray portion member 112 and the case 101 are structured as separate units, they may instead be structured integrally.

Given the structure set forth above, the peripheral edges of the openings 101a, 101b, and 101e of the case 101, and the electrical connecting terminal portion 102, the window frame 106, and the cover 111, which are the covering members for the respective openings, are not bonded using an adhesive agent, and thus the operation is convenient when disassembling the housing 10 at the time of replacing a component within the housing 10. Additionally, between the peripheral edges of the openings 101a, 101b, and 101e of the housing 10 and the electrical connecting terminal portion 102, the window frame 106, and the cover 111, which are the covers for each of the openings, seals 103, 105, and 110 are disposed so as to block the gaps therebetween airtightly, to prevent the incursion of moisture into the housing 10 when in the assembled state.

Furthermore, in order to further increase the airtightness in one or more embodiments of the first example, that is, in order to more fully prevent the incursion of moisture into the housing 10, the air pressure within the housing 10 is set to a value that is lower than the air pressure outside of the housing 10 (between the housing 10 and the main body enclosure 15). The air pressure on the outside of the housing 10 is the ambient air pressure (atmospheric pressure) of the environment wherein the projector 1 is disposed.

Given this, the housing 10 is assembled in a low-pressure environment wherein the air pressure is lower than atmospheric pressure, enabling the air pressure within the housing 10 to be set to a value that is lower than atmospheric pressure. The air pressure difference causes the cover to be pressed from the outside surface toward the inside surface (that is, toward the peripheral edges of the openings 101a, 101b, and 101e of the case 101). As a result, the gaps between the electrical connecting terminal portion 102, the window frame 106, and the cover 111, which are the covers for the individual openings, and the peripheral edges of the openings 101a, 101b, and 101e of the case 101 are narrowed further (where the peripheral edges of the respective openings and the covers are pressed together). Consequently, the seals 103, 105, and 110 are disposed in gaps that are narrower than in the case wherein there is no air pressure differential between the inside and the outside of the housing 10, thus increasing the effect of preventing the incursion of moisture into the housing 10, by blocking the gaps more airtightly.

In one or more embodiments of the first example, the gaps between the peripheral edges of the openings and the covering members are blocked airtightly by seals, and, additionally, different air pressures are set for the inside and the outside of the housing that contains the optics module, so that the peripheral edges of the openings and the covers are pressed together by the air pressure difference. Consequently, the airtightness will be higher, and the incursion of moisture into the inside of the housing is prevented. On the other hand, because the peripheral edges of the openings and the covers are not bonded together using an adhesive agent, at the time of disassembly, that is, when removing a cover from the peripheral edges of an opening, the convenience in the operation is high. The projector described above is well suited for use in a head-up display.

### < Second Example >

In the first example, set forth above, the electrical connecting terminal portion 102, the window frame 106, and the cover 111, which are the covers, are configured so as to attach from the outside to the openings 101a, 101b, and 101e of the case 101. Consequently, the structure is one wherein the air pressure within the housing 10 is set to a value lower than the air pressure on the outside of the housing 10, to cause the covers and the case 101 (the peripheral edges of the individual openings) to being pressed together.

However, depending on the attachment structure of the covers, instead the air pressure within the housing 10 may be set to a value that is higher than the air pressure on the outside of the housing 10. In a structure wherein the electrical connecting terminal portion 102 and the window frame 106, which are covering members, are attached to the openings 101a and 101b from the inside of the case 101, the air pressure on the inside of the housing 10 is set to a value that is higher than the air pressure on the outside of the housing 10. The air pressure on the inside of the housing 10 can be set to a value that is higher than atmospheric pressure by assembling the housing 10 in a high-pressure environment wherein the air pressure is higher than atmospheric pressure.

The top opening 101e of the case 101 is an opening to enable the optics module 108, and the like, to be put in and out of the housing 10, where the operation to attach the cover 111 to the peripheral edges of the top opening 101e is the final assembly operation for the housing 10. Consequently, it is difficult to attach the cover 111 to the inside of the case 101 for the top opening 101e, so in one or more embodiments of a second example, the cover 111 is attached to the top opening 101e from the outside of the case 101.

When the air pressure within the housing 10 is set so as to be higher than the air pressure on the outside of the housing, the cover 111 is pressed, by the air pressure difference, from the inside toward the outside. Given this, the structure for attaching the cover 111 to the top opening 101e is structured as, for example, illustrated in FIG. 7 so that the cover 111 is not dislodged by the pressure from the air pressure difference.

FIG. 7 is a cross-sectional schematic diagram illustrating a structure for attaching the cover 111 to the case 101 in one or more embodiments of the second example. A trapezoidal flange 101g that widens in the downward direction is formed in a ring shape, protruding to the outside from the outer peripheral surfaces of the sidewalls at the top of the sidewalls of the case 101. The cover 111 comprises sidewalls 111c, and a first flange 111d that is formed in a ring shape protruding toward the inside from the inner periphery of surfaces of the side walls 111c, and a second flange 111e that is formed in a ring shape protruding to the outside from the outer peripheral surfaces of the sidewalls 111c, are formed at the bottom of the sidewalls 111c.

The seal 110 may be disposed at either of the gaps S or T between the case 101 and the cover 111, to block either of the gaps airtightly. Moreover, the gaps that are blocked need not be limited to only one, but rather a plurality of seals 110 may be disposed so as to block a plurality of gaps.

In one or more embodiments of the second example, when the cover 111 is attached to the case 101, the attachment is performed by sliding the first flange 111d so as to press on the inclined surface of the flange 101g. The frame member 112 is attached to the bottom surface of the flange 101f, and with the cover 111 attached from above the case 101, it is secured through screws that pass through screw holes (not shown) formed in the flange 111e and the frame member 112.

In this way, in a state wherein the cover 111 is attached to the case 101, the top surface of the first flange 111d would press against the bottom surface of the flange 101g if the cover 111 were pulled upwardly. Consequently, even when the air pressure within the housing 10 is set to a value that is higher than the air pressure on the outside of the housing 10, still the cover 111 will not become dislodged from the case 101.

The case 101 is pressed toward the outside (that is, toward the cover 111) by setting the air pressure within the housing 10 to a value that is higher than the air pressure outside of the housing 10, thus narrowing the gaps S and T (pressing the peripheral edges of the top surface opening 101e and the cover 111 together). Consequently, the seal that is disposed in the gap S and/or the gap T is disposed in a gap that is narrower when compared to the case wherein there is no pressure difference between the inside and the outside of the housing 10, thus blocking the gaps even more airtightly, thus increasing the effect of preventing the incursion of moisture into the housing 10.

One or more embodiments of the second example may have the same effects as one or more embodiments of the first example.

### < Third Example >

In one or more embodiments of the first and second examples described above, the housing 10 is assembled either in a low-pressure environment or a high-pressure environment to set the air pressure within the housing 10 to be different from the air pressure on the outside of the housing 10. However, if air pressure adjusting means able to adjust the air pressure within the housing 10 are provided, the assembly environment is not limited to these.

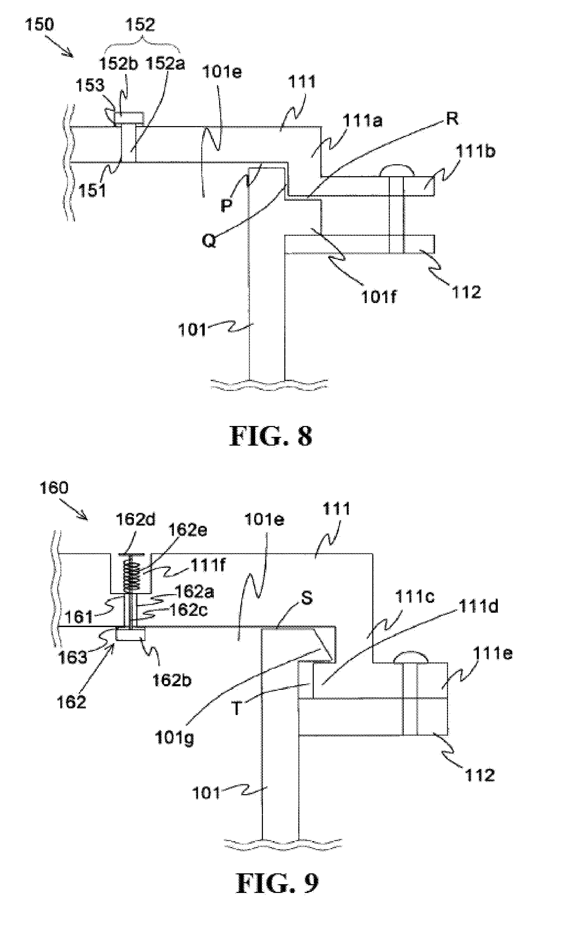

Given this, a structure wherein air pressure adjusting means able to adjust the air pressure within the housing 10 are provided within the housing 10 that is illustrated in one or more embodiments of the first example will be explained in one or more embodiments of a third example. FIG. 8 is a cross-sectional schematic diagram illustrating the structure of the attachment of the cover 111 to the case 101 in one or more embodiments of the third example. The parts that may be identical to the structures illustrated in FIG. 6 are assigned identical reference numerals, and explanations thereof are omitted.

The cover 111 is provided with an air pressure adjusting member 150 for adjusting the air pressure within the housing 10. The air pressure adjusting member 150 is provided with a through hole 151, provided in the cover 111, a stopper 152 that comprises a shaft 152a that passes through the through hole 151, a head 152b with a diameter larger than that of the through hole 151, formed on the top end of the shaft 152a, and a seal 153 for blocking airtightly the gap that is formed between the through hole 151 and the stopper 152.

The stopper 152 is inserted into the through hole 151 from the top surface side of the cover 111, to block the through hole 151. In this structure, the stopper 152 can be removed from the through hole 151 to, for example, remove the air from within the housing 10, or to replace the air within the housing 10 with titanium nitride gas, or the like, to reduce the air pressure within the housing 10.

One or more embodiments of the third example may have the same effects as in one or more embodiments of the first example. Additionally, because the air pressure within the housing can be adjusted after the housing is assembled, there is no limitation to the assembly environment. Moreover, during use the air pressure within the housing can be adjusted to an air pressure that is appropriate depending on the air pressure of the external environment.

### < Fourth Example >

A structure wherein air pressure adjusting means able to adjust the air pressure within the housing 10 are provided within the housing 10 that is illustrated in one or more embodiments of the second example will be explained. FIG. 9 is a cross-sectional schematic diagram illustrating the structure of the attachment of the cover 111 to the case 101 in one or more embodiments of the fourth example. The parts that may be identical to the structures illustrated in FIG. 7 are assigned identical reference numerals, and explanations thereof are omitted.

In are identical the fourth example, the cover 111 is formed with a wall thickness that is thicker than that of the cover 111 in FIG. 7, and a recessed portion 111f is formed recessed from the top surface thereof. The part wherein the recessed portion 111f is formed in the cover 111 is provided with an air pressure adjusting member 160 for adjusting the air pressure within the housing 10. The air pressure adjusting member 160 is provided with a through hole 161, a stopper 162, and a seal 163 for blocking airtightly the gap that is formed between the through hole 161 and the stopper 162.

The stopper 162 is provided with a shaft 162a that passes through the through hole 161, a head 162b having a diameter that is larger than that of the through hole 161, formed at the bottom end of the shaft 162a, a center shaft 162c having one end connected to the head 162b and the other and provided protruding toward the recessed portion 111f, a pressing portion 162d that is provided on the top end of the center shaft 162c, and a spring 162e that is disposed between the top end of the shaft 162a and the pressing portion 162d, wrapped around the center shaft 162c.

The stopper 162, in the state wherein the housing 10 has been assembled, passes through the cover 111 from the top surface side, to block the through hole 161 together with the seal 163. In this structure, the center shaft 162c is moved toward the inside of the housing 10 by pressing the pressing portion 162d against the elastic force of the spring 162e, thereby moving the shaft 162a and the head 162b toward the inside of the housing 10. Consequently, the gap between the through hole 161 and the stopper 162 is made larger, making it possible to pressurize the air within the housing 10 through this gap.

After the air pressure within the housing 10 has been adjusted, the pressing on the pressing portion 162d is terminated, at which time the stopper 162 is moved toward the outside from the inside of the housing 10, by the elastic force of the spring 162e, thus blocking airtightly the gap that is formed between the through hole 161 and the stopper 162, together with the seal 163.

One or more embodiments of the fourth example may have the same effect as one or more embodiments of the third example.

Embodiments according to the present invention are explained above. It will be appreciated by one skilled in the art that the one or more embodiments set forth above are illustrative, and the combinations of the various constituent elements and various procedures may be varied in a variety of ways, within the scope of the present invention.

For example, while in the one or more embodiments set forth above the video processor 251, the LD controller 252, the heating and cooling controller 253, an abnormality determiner 254, and a protection operation part 255 are embodied as functional portions of the CPU 25, the scope of application of the present invention is not limited to these examples. One or more of the functional portions of the CPU 25 may be embodied as physical constituent portions (for example, electrical circuits), or the like.

### Explanation of Reference numerals

- 100:: Head-Up Display (HUD) Device
- 1:: Projector
- 10:: Housing
- 10a:: Window
- 11a, 11b, 11c:: Laser Diodes (LDs)
- 101e:: Top Surface Opening
- 12:: Optics System
- 121a, 121b, 121c:: Collimator Lenses
- 122a, 122b:: Beam Splitters
- 123:: Condensing Lens
- 124:: MEMS Mirror
- 13:: Thermistor (e.g. Temperature Detecting Portion)
- 14a, 14b, 14c:: Heating and Cooling Portions
- 141a, 141b, 141c:: Conducting Members
- 142a, 142b, 142c:: Peltier Elements
- 143a, 143b, 143c:: Heat Sinks
- 15:: Main Body Enclosure
- 15a:: Light Emitting Opening
- 150, 160:: Air Pressure Adjusting Members
- 16:: LD Driver
- 17:: Mirror Servo Part
- 18:: Heating and Cooling Driver
- 181:: Peltier Controller
- 182:: Switching Part
- 19:: Power Source
- 20:: Power Source Controller
- 21:: Current Detector
- 22:: Input and Output I/F
- 23:: Operation Part
- 24:: Storage Part
- 25:: CPU
- 251:: Video Processor
- 252:: LD Controller
- 253:: Heating and Cooling Controller
- 254:: Abnormality Determiner
- 255:: Protection Operation Part
- 6:: Line of Sight of the User
- 7:: Scanning Laser Light
- 8:: Vehicle
- 81:: Windshield
- 82:: Combiner

## Claims

1. A projector (1) comprising:
a main body enclosure (15); and
a housing (10) configured to house an optics module (108) and is disposed within the main body enclosure (15), wherein the housing (10) comprises:
a case (101) comprising a first opening;
a first cover (111) attached to the first opening; and
a first seal (103, 105, 110) configured to create an airtight seal between a peripheral edge of the first opening and the first cover (111),
wherein air pressure within the housing (10) is set to a value that is different from air pressure between the main body enclosure (15) and the housing (10).

2. The projector (1) according to claim 1, wherein:
the housing (10) further comprises a window attached to the first opening,
the optics module (108) comprises a light source (11a, 11b, 11c) configured to emit a light beam that passes through the window (104),
the first cover (111) covers the first opening from outside of the first opening, and
the air pressure within the housing (10) is set to a value that is lower than the air pressure between the main body enclosure (15) and the housing (10).

3. The projector (1) according to claim 1, wherein:
the housing (10) further comprises a window (104) attached to the first opening,
the optics module (108) comprises a light source (11a, 11b, 11c) configured to emit a light beam that passes through the window (104),
the first cover (111) covers the first opening from inside of the first opening; and
the air pressure within the housing (10) is set to a value that is higher than the air pressure between the main body enclosure (15) and the housing (10).

4. The projector (1) according to claim 2 or 3, wherein the light source (11a, 11b, 11c) is a laser diode.

5. The projector (1) according to any one of claims 2 to 4, wherein:
the case (101) further comprises a second opening (101e) that enables the optics module (108) to be removed from or placed in the case (101); and
the housing (10) further comprises a second cover (111) that covers the second opening (101e) from the outside of the second opening (101e).

6. The projector (1) according to any precedent claims, wherein:
the first cover (111) is provided with a pressure adjusting member (150, 160) configured to adjust the air pressure within the housing (10).

7. The projector (1) according to claim 6, wherein the pressure adjusting member (150, 160) comprises:
a through hole (151) provided in the first cover (111);
a stopper (152) comprising a shaft (152 a) that passes through the through hole (151);
a head (152b) with a diameter larger than a diameter of the through hole (151); and
a second seal (153) that creates an airtight seal between the through hole (151) and the stopper (152).

8. A head-up display (100) comprising:
a projector (1) according to any precedent claims; and
a combiner (82) that displays a virtual image by reflecting a beam of light emitted by a light source (11a, 11b, 11c) mounted in the optics module (108).
